# EUROPÄISCHE PATENTSCHRIFT

(11) **EP 3 099 466 B1**
(45) Veröffentlichungstag und Bekanntmachung des Hinweises auf die Patenterteilung: **20.03.2019**
(21) Anmeldenummer: 15733623.1
(22) Anmeldetag: 23.06.2015
(51) Int. Cl.: B29C 49/46, B29C 49/12, B29C 49/78, B29C 49/36, B29C 49/42, B29C 49/64, B29K 67/00, B29K 105/00, B29L 31/00

(54) **VERFAHREN UND BLASFORMUNGSMASCHINE ZUR BLASFORMENDEN HERSTELLUNG VON ZUMINDEST BEREICHSWEISE STERILEN BEHÄLTERN**
METHOD AND BLOW-MOULDING MACHINE FOR THE BLOW-MOULDING PRODUCTION OF CONTAINERS THAT ARE STERILE AT LEAST IN CERTAIN REGIONS
PROCÉDÉ ET MACHINE DE MOULAGE PAR SOUFFLAGE PERMETTANT LA PRODUCTION PAR MOULAGE PAR SOUFFLAGE DE CONTENANTS STÉRILES AU MOINS PAR ENDROITS

(30) Priorität: 13.07.2014 DE 102014010283
(43) Veröffentlichungstag der Anmeldung: 07.12.2016
(73) Patentinhaber: KHS Corpoplast GmbH, 22145 Hamburg (DE)
(72) Erfinder: LITZENBERG, Michael, 21502 Geesthacht (DE); GERHARDS, Martin, 22089 Hamburg (DE); HEROLD, Thomas, 22941 Bargteheide (DE); KLATT, Dieter, 22147 Hamburg (DE)
(74) Vertreter: Hausfeld, Norbert
(86) Internationale Anmeldenummer: PCT/EP2015/001260
(87) Internationale Veröffentlichungsnummer: WO 2016/008562

(56) Entgegenhaltungen:
- EP-A1- 2 008 667
- DE-A1-102007 039 010
- DE-A1-102008 038 143
- DE-A1-102010 026 166
- DE-A1-102012 010 985
- US-A1- 2013 183 195
- US-A1- 2014 144 105

## Beschreibung

Die Erfindung betrifft ein Verfahren zur Herstellung von blasgeformten, mindestens bereichsweise sterilen Behältern in einer Blasformungsmaschine, insbesondere in einer Blasformungsmaschine mit auf einem rotierenden Blasrad angeordneten Blasstationen, bei dem ein Vorformling aus einem thermoplastischen Material zunächst erwärmt und dann in einer Blasstation von einer insbesondere hohlen Reckstange gereckt und mittels einer Blasdüse mit einem unter Druck stehenden Blasfluid beaufschlagt wird, sowie bei dem dem Vorformling in der Blasstation zur Ausführung einer Sterilisierung ein Sterilisierfluid zugeführt wird, wobei das Sterilisierfluid in der Blasstation aus einem Auslass in den Vorformling eingespeist und über einen Einlass wieder abgeführt wird und dazwischen einen Strömungsweg durchläuft, wobei das Sterilisierfluid auf seinem Strömungsweg durch die Reckstange hindurch oder an der Reckstange vorbeigeführt wird.

Darüber hinaus betrifft die Erfindung eine Blasformungsmaschine, insbesondere eine Blasformungsmaschine mit auf einem rotierenden Blasrad angeordneten Blasstationen, zur Herstellung von blasgeformten, mindestens bereichsweise sterilen Behältern, die mit einer Heizstrecke zur Temperierung der Vorformlinge und mit einer Blasstation zur Blasverformung der Vorformlinge in die Behälter versehen ist, wobei die Blasstation eine Reckstange aufweist, sowie bei der eine Sterilisationseinrichtung in der Blasstation angeordnet ist mit den Merkmalen des gattungsbildenden Teiles von Anspruch 8.

Eine Herstellung von sterilen, blasgeformten Behältern erfolgt typischerweise derart, dass diese Behälter nach ihrer Blasformung und vor einer Befüllung unter Verwendung von Wasserstoffperoxid oder anderen Chemikalien sterilisiert werden. Ebenfalls ist es bereits bekannt, die bei der Blasformung der Behälter als Ausgangsprodukt verwendeten Vorformlinge zu sterilisieren, insbesondere den Bereich der inneren Oberfläche dieser Vorformlinge. Die Sterilisierung des Vorformlings bietet den Vorteil eines reduzierten Verbrauches an Sterilisierfluid, da der Vorformling gegenüber dem daraus blasgeformten Behälter eine erheblich kleinere Oberfläche aufweist. Der Nachteil ist, dass die Möglichkeit einer Neuverkeimung auf dem weiteren Transportweg des Vorformlings beziehungsweise des daraus blasgeformten Behälters besteht.

Bei einer Behälterformung durch Blasdruckeinwirkung werden Vorformlinge aus einem thermoplastischen Material, beispielsweise Vorformlinge aus PET (Polyethylenterephtalat), innerhalb einer Blasformungsmaschine unterschiedlichen Bearbeitungsstationen zugeführt. Typischerweise weist eine derartige Blasformungsmaschine eine Heizeinrichtung sowie eine Blasstation auf, in deren Bereich der zuvor temperierte Vorformling durch biaxiale Orientierung zu einem Behälter expandiert wird. Die Expansion erfolgt z.B. mit Hilfe von Druckluft, die in den zu expandierenden Vorformling mittels einer Blasdüse eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE -OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind (Blasräder), ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Hinsichtlich der Sterilisierung von Vorformlingen sind aus dem Stand der Technik bereits unterschiedliche Verfahren und Vorrichtungen bekannt, die jedoch alle verfahrensspezifische Nachteile aufweisen, die einer zuverlässigen Sterilisierung der Vorformlinge bei gleichzeitig hohen Durchsatzraten entgegenstehen.

In der EP-A 1 086 019 wird beispielsweise die Sterilisierung von heißen Vorformlingen mit einem heißen gasförmigen Sterilisationsmittel beschrieben. Es werden hintereinander angeordnete separate Behandlungsstationen verwendet, nämlich ein erstes Heizmodul, ein Sterilisiermodul sowie ein zweites Heizmodul. Nachteilig sind hierbei das Temperaturverhalten des Vorformlings während des Sterilisiervorganges sowie das unkontrollierte Austreten des Sterilisationsmittels aus dem Vorformling innerhalb der Heizung. Weiterhin nachteilig ist, dass der Vorformling nach seiner Sterilisierung noch eine erhebliche Transportstrecke mit der Gefahr einer Neuverkeimung zu durchlaufen hat. Einen ähnlichen Stand der Technik zeigt auch die US 2014/0144105 A1.

In der EP-A 1 896 245 wird ein Verfahren beschrieben, bei dem vor der Heizung ein gasförmiges Sterilisationsmittel in einen kalten Vorformling eingeleitet wird und hier kondensiert. Problematisch ist hier die Sicherstellung einer vollständigen Kondensatbildung auf der gesamten Innenfläche des Vorformlings, da das einströmende heiße Sterilisationsmittel die Innenwandtemperatur des Vorformlings erhöht. Darüber hinaus tritt auch hier das Sterilisationsmittel nach seiner Verdampfung im Bereich der Heizung unkontrolliert innerhalb der Heizung aus dem Vorformling aus. Weiterhin nachteilig ist auch hier, dass der Vorformling nach seiner Sterilisierung noch eine erhebliche Transportstrecke mit der Gefahr einer Neuverkeimung zu durchlaufen hat.

In der EP-A 2 138 298 wird eine Vorrichtung beschrieben, bei der vorsorglich sowohl vor dem verwendeten Blasmodul als auch hinter dem verwendeten Blasmodul Sterilisiereinrichtungen angeordnet sind. Hieraus resultiert ein sehr großer maschinenbaulicher Aufwand. Eine Sterilisiereinrichtung hinter der Blasformungsmaschine zur Sterilisierung fertig geblasener Behälter vor deren Befüllung offenbart z.B. die EP 2 008 667 A1.

In der WO 2010/020530 A1 wird die Anordnung einer Sterilisiereinrichtung zwischen einer Heizung und dem Blasmodul beschrieben. Bei diesem Verfahren ist die Eintragsmenge von Sterilisationsmittel in den Bereich des Blasmoduls nur schwer vorhersehbar. Darüber hinaus ist die Austrittsmenge an Sterilisationsmittel in die Umgebung nicht kontrollierbar und eine entsprechende Kontamination nicht ausgeschlossen.

In der DE 10 2010 026 166 A1 und in der US 2013/0183195 A1 erfolgt eine Sterilisierung von Vorformlingen im Bereich der Heizstrecke für die Temperaturkonditionierung der Vorformlinge. Zu diesem Zwecke ist eine Sterilisiereinrichtung im Bereich der Heizstrecke angeordnet. Weitere verwandte Verfahren und Vorrichtungen sind aus den Dokumenten DE102012-010985A1 und DE102007-039010A1 bekannt.

Nach einer erfolgten Sterilisierung und Beheizung der Vorformlinge werden diese einer Blasstation zugeführt und dort unter Verwendung von steriler Blasluft in die Behälter umgeformt. Die Zuführung der Blasluft und die Einspeisung der Blasluft erfolgt mittels einer Blasdüse, die z.B. dichtend an dem Vorformling anliegt. Bei der Blasformung der Behälter strömt die verwendete Blasluft z.B. aus der Reckstange heraus oder an der Reckstange vorbei. Darüber hinaus kommt die Reckstange im Bereich der Reckstangenkuppe sowohl mit dem Vorformling als auch mit dem geblasenen Behälter in Kontakt. Zur Gewährleistung einer ausreichenden Sterilität der geblasenen Behälter ist es somit erforderlich, auch für eine ausreichende Sterilität der Reckstange zu sorgen. Auch die Blasdüse sollte steril gehalten werden, um eine Verkeimung der Vorformlinge zu vermeiden. Ein zuverlässiges und zugleich technisch einfach durchführbares Verfahren hierfür ist bislang nicht bekannt geworden.

Die DE 10 2008 038 143 A1 offenbart die Sterilisierung des Vorformlings nach dem Ende des Heizvorgangs in der Heizeinrichtung und vor dem Ende des Blasformungsvorgangs in der Blasstation. Es ist dazu eine Sterilisationseinrichtung vorgesehen, zu der unter anderem angegeben ist, dass diese in die Blasformungseinrichtung integriert werden kann. Es wird weiterhin erläutert, dass das für die Sterilisierung verwendete Sterilisationsgas durch eine hohle Reckstange in das Innere der Vorformlinge eingeführt werden kann. Weiter wird erläutert, dass auch ein Teil des Expansionsvorganges der Behälter mit dem Sterilisationsgas durchgeführt werden kann. Als vorteilhaft wird an dieser Konstruktion angesehen, dass die Sterilisierung der Vorformlinge zu einem späten Zeitpunkt erfolgt, so dass die Gefahr einer Neuverkeimung verringert ist. Zugleich wird der Vorteil beibehalten, nur den kleinflächigen Vorformling, nicht aber den großflächigen Behälter zu sterilisieren. Als nachteilig wird angesehen, dass bei dieser Konstruktion auch weiterhin das Problem ungelöst bleibt, dass eine ausreichende Sterilität der Reckstange und der Blasdüse zu gewährleisten ist. Als weiterer Nachteil wird angesehen, dass nach der Lehre der DE 10 2008 038 143 A1 nur die Vorformlingsinnenwand der Wirkung des Sterilisiergases ausgesetzt wird. Weitere Nachteile werden darin gesehen, dass dem unkontrollierten Austritt des Sterilisiergases nicht begegnet wird. Auch aus energetischen Gründen ist die vorgeschlagene Lösung nicht günstig, wenn das Sterilisiergas unter dem erforderlichen Blasdruck in den Vorformling eingebracht werden soll.

Aufgabe der vorliegenden Erfindung ist es, ein Verfahren der einleitend genannten Art derart zu verbessern, dass in einfacher Weise eine ausreichende Sterilität gewährleistet werden kann.

Diese Aufgabe wird erfindungsgemäß durch ein Verfahren dadurch gelöst, dass die Zuführung des Sterilisierfluides im laufenden Betrieb der Blasformungsmaschine erfolgt, insbesondere wobei der Auslass zumindest zeitweise in Bodennähe des Vorformlings angeordnet wird, und insbesondere wobei der Einlass zumindest zeitweise oberhalb des Auslasses angeordnet wird, und insbesondere wobei zwischen dem Auslass und dem Einlass ein kontinuierlicher Fluß an Sterilisierfluid erzeugt wird, der entlang des Vorformlings und der Reckstange und der Blasdüse geführt ist. Mit Vorteil ist erfindungsgemäß vorgesehen, dass der Vorformling mit dem unter Druck stehenden Blasfluid erst beaufschlagt wird, nachdem die Sterilisierung mit dem Sterilisierfluid beendet ist, wobei der Vorformling optional zwischen der Sterilisierung und der Blasformung mit einem sterilen Spülfluid gespült wird.

Die Aufgabe wird erfindungsgemäß auch durch eine Blasformungsmaschine gelöst, bei der das Sterilisierfluid von ventilbeherrschten Zuführeinrichtungen so geführt wird, dass es die Vorformlingsinnenwand bis einschließlich der Dichtfläche für die Abdichtung gegen einen später aufzusetzenden Behälterverschluss überstreicht. Mit Vorteil ist erfindungsgemäß vorgesehen, dass der Vorformling mit dem unter Druck stehenden Blasfluid erst beaufschlagt wird, nachdem die Sterilisierung mit dem Sterilisierfluid beendet ist, wobei der Vorformling optional zwischen der Sterilisierung und der Blasformung mit einem sterilen Spülfluid gespült wird. Die Vorrichtung weist dazu Ventilsteuermittel und/oder Führungsmittel auf, die zur Durchführung eines Verfahrens nach einem oder mehreren der vorhergehenden Verfahrensansprüche ausgebildet und/oder angeordnet sind. Diese Vorrichtung gewährleistet eine effektive Sterilität des Vorformlings und der kritischen Bereiche der Blasmaschine (Reckstange, Blasdüse) mit geringem Aufwand.

Weitere vorteilhafte Ausgestaltungen des Verfahrens und der Vorrichtung sind in den Unteransprüchen angegeben.

Durch die Sterilisierung des Vorformlings innerhalb der Blasstation erfolgt die Sterilisierung zu einem spätestmöglichen Zeitpunkt, so dass eine Neuverkeimung des Vorformlinges nicht mehr möglich ist. Für eine aseptische Abfüllung ist nach der Blasformung nur noch eine Neuverkeimung des blasgeformten Behälters zu verhindern, z.B. indem der Behälter in einem Reinraum geführt wird oder z.B. indem ein Sterilluftkorridor erzeugt wird, in dem der Behälter zumindest mit seinem noch unverschlossenen Mündungsbereich geführt wird. Dadurch, dass das Sterilisierfluid durch die Reckstange hindurch oder an ihr vorbei geführt wird, und dadurch, dass Führungsmittel das Sterilisierfluid entlang der Vorformlingsinnenwand bis einschließlich der Dichtfläche führen, wird gleichzeitig auch die Reckstange in demjenigen Stangenbereich sterilisiert, die für eine Neuverkeimung kritisch ist. Es sind dadurch arbeitsintensive Ein-/ und Ausbauvorgänge vermeidbar, die für eine externe Sterilisierung der Reckstange erforderlich wären. Bevorzugt erfolgt die Sterilisierung dann, wenn die Blasdüse ihre Blasposition erreicht hat, d.h. dichtend auf den Vorformling abgesenkt ist. Dadurch ist ermöglicht, dass auch die Blasdüse von dem Sterilisierfluid sterilisiert wird. Es wird als erheblicher Vorteil der vorliegenden Erfindung angesehen, dass die für die Sterilität kritischen Maschinenteile der Blasformungsmaschine gleichzeitig sterilisiert werden, nämlich die Blasdüse und die Reckstange, sowie der Vorformling. Ein weiterer Vorteil der vorliegenden Erfindung ist, dass dies laufend im Herstellungsprozess erfolgt, also die kritischen Maschinenteile bei jeder Umdrehung des Blasrades erneut dem Sterilisierprozess unterworfen sind.

Die Beaufschlagung des Vorformlings mit dem unter Druck stehenden Blasfluid erfolgt erfindungsgemäß erst dann, nachdem die Sterilisierung mit dem Sterilisierfluid beendet ist. Anderenfalls müsste das Sterilisierfluid unter einem typischen Vorblasdruck oder einem typischen Fertigblasdruck in den Vorformling beziehungsweise in die entstehende Behälterblase eingeleitet werden. Bei Verwendung z.B. von verdampftem Wasserstoffperoxid sind auf einem solchen Druckniveau hohe Temperaturen erforderlich, um das Wasserstoffperoxid zu verdampfen beziehungsweise im gasförmigen Zustand zu halten. Dieses Problem wird vermieden, wenn vor dem eigentlichen Blasformungsvorgang die Sterilisierung in der Blasstation durchgeführt wird.

Das Sterilisierfluid und das Blasfluid sind gemäß der vorliegenden Erfindung und anders als in der DE 10 2008 038 143 A1 verschiedene Fluide. Das Sterilisierfluid kann z.B. ein sterilisierendes Gasgemisch aus Warmluft und verdampften Wasserstoffperoxid sein. Das Blasfluid ist in der Regel Sterilluft.

Optional und mit Vorteil wird zwischen dem beschriebenen Sterilisierungsvorgang und dem Blasformungsvorgang eine Spülung mit einem sterilen Spülfluid vorgesehen. Dieses Spülfluid kann z.B. das Blasfluid sein, wobei gegenüber dem Blasformungsprozess das Fluid mit einem Druck kleiner einem typischen Vorblasdruck in den Vorformling eingeleitet wird. Das Spülfluid wird beispielsweise mit einem Druck kleiner 5 bar, bevorzugt kleiner 3 bar in den Vorformling eingebracht. Bevorzugt wird das Fluid durch die hohle Reckstange hindurch zugeführt, um auch die Reckstange von Rückständen des Sterilisierfluides zu befreien, um nachteilige Wirkungen des Sterilisierfluides auf den Blasprozess zu vermeiden. Eine Abführung z.B. durch die hohle Reckstange hindurch führt aus strömungstechnischen Gründen zu weniger guten Ergebnissen als die Zuführung durch die Reckstange hindurch.

Mit Vorteil ist vorgesehen, dass das Sterilisierfluid auch über den Gewindebereich des Vorformlinges geführt wird, um auch diesen kritischen Bereich zu sterilisieren. Es können dazu entsprechende Führungsmittel vorgesehen werden, um den Strömungsweg in der gewünschten Weise vorzugeben. Insbesondere ist es möglich und vorteilhaft, das Außengewinde des Vorformlinges möglichst vollständig zu überstreichen, insbesondere bis hin zum Tragring, wobei auch Konstruktionen bekannt sind, bei denen der Tragring durch eine andere Handhabungskontur ersetzt ist. Bei solchen Vorformlingen sollte das Sterilisierfluid so geführt werden, dass es den Gewindebereich des Vorformlinges bis hin zur Handhabungskontur überstreicht.

Die Strömungsführung des Sterilisierfluides kann z.B. so erfolgen, dass die Abführung über die Reckstange hindurch erfolgt und die Zuführung außerhalb der Reckstange. Eine bessere Beeinflussung des Strömungsweges des Sterilisierfluides ist aber dadurch erreichbar, dass das Sterilisierfluid durch die Reckstange hindurch zugeführt wird. Mit Vorteil erfolgt dabei die Abführung des Sterilisierfluides durch die Blasdüse, die dazu mit einem Auslass versehen ist, so dass keine zusätzliche Abführeinrichtung vorzusehen ist und auch die Blasdüse bzw. der für Sterilität kritische Bereich der Blasdüse gezielt mit dem Sterilisierfluid in sterilisierende Berührung gelangt.

Gegenüber Blasstationen ohne Sterilisiermöglichkeit des Vorformlinges in der Blasstation verlängert sich bei anspruchsgemäßer Verfahrensausbildung die Prozesszeit für die Blasformung des Behälters um diejenige Zeit, die für die Sterilisierung aufzuwenden ist. Im Falle von rotierenden Blasrädern ließe sich dieses beispielsweise dadurch kompensieren, dass die Umlaufdauer der Blasstationen erhöht wird. Eine ausreichende Sterilisierung - bei einer nicht zu großen Erhöhung der Prozesszeit - wird dadurch erreicht, dass eine Einwirkzeit des Sterilisierfluides von 50 Millisekunden bis 500 Millisekunden vorgesehen wird. Die das Zuströmen und Abströmen des Sterilisierfluides beherrschenden Schaltventile sind entsprechend anzusteuern, damit das Sterilisierfluid für diese genannte Einwirkzeit den Vorformling durchströmt. Es ist auch möglich, dass die Einwirkzeit einstellbar ist, um z.B. in Abhängigkeit von dem abzufüllenden Füllgut und in Abhängigkeit der Sterilisierungsergebnisse eine Verlängerung oder eine Verkürzung der Einwirkzeit einzustellen.

Mit Vorteil wird als Sterilisierfluid ein Gemisch aus warmer Luft und verdampftem Wasserstoffperoxid verwendet. Dieses Gemisch zeigt eine ausreichende Sterilisierwirkung und ist technisch einfach und wirtschaftlich herstellbar. Es wird dazu unter anderem ein Verdampfer benötigt, der flüssiges Wasserstoffperoxid verdampft. Mit Vorteil wird dieser Verdampfer auf dem Blasrad angeordnet.

Der Verdampfer wird von einem Wasserstoffperoxid-Vorratsbehälter mit flüssigem Wasserstoffperoxid beschickt. Dieser Behälter könnte ebenfalls auf dem Blasrad angeordnet sein. Er müsste dann so ausreichend dimensioniert werden, dass nach seiner Befüllung eine ausreichende Maschinenlaufzeit gewährleistet ist, bevor eine Neubefüllung erfolgen muss. Der Vorratsbehälter könnte auch außerhalb des Blasrades angeordnet sein und eine Zuführung über einen Drehübertrager z.B. in ein Druckgefäß auf dem drehenden Blasrad erfolgen, welches dann den Verdampfer versorgt.

Mit Vorteil wird das Sterilisierfluid, also z.B. das Gemisch aus verdampftem Wasserstoffperoxid und Luft, in einen Verteilungsring eingespeist, aus dem heraus die hohlen Reckstangen mit dem Sterilisierfluid versorgt werden. Wenn die Zuführung nicht durch die hohle Reckstange hindurch erfolgt, dann sind an diesen Verteilungsring die alternativ gewählten Sterilisierfluid-Zuführmittel angeschlossen.

Nachdem das Sterilisierfluid die Vorformlinge in der Blasstation durchströmt hat und abgeführt worden ist, z.B. über die Blasdüsen, wird das abgeführte Sterilisierfluid mit Vorteil in einen gemeinsamen Ringkanal abgegeben, der z.B. stationär angeordnet ist und in den die Sterilisierfluid-Abführmittel auslassseitig münden. Aus diesem Ringkanal kann das Sterilisierfluid z.B. mittels eines Ventilators abgesaugt und einer weiteren Verwendung oder einer Entsorgung zugeführt werden. In Alternative zu seiner Wiederverwendung kann das Sterilisiermittel aber auch neutralisiert werden, z.B. katalytisch. Wasserstoffperoxid kann z.B. katalytisch in Wasser und Sauerstoff aufgespalten werden. Die Wiederverwendung erweist sich als wirtschaftlich sinnvoll, die Neutralisierung vermeidet schädliche Wirkungen des Sterilisiermittels.

Die oben für erfindungsgemäße Verfahren geschilderten Vorteile gelten in analoger Weise für die erfindungsgemäßen Vorrichtungen.

In den Zeichnungen sind Ausführungsbeispiele der Erfindung schematisch dargestellt. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine prinzipienhafte und schematische Darstellung des Sterilisierprozesses und des Blasformungsprozesses mit Darstellung der Strömungswege des Blasfluides und des Sterilisierfluides sowie mit schematischer Darstellung der die Prozesse beherrschenden und steuernden Ventile nach einem ersten Ausführungsbeispiel,
- Fig. 6: eine Darstellung gemäß Fig. 5 zu einem zweiten Ausführungsbeispiel, und
- Fig. 7: eine Darstellung gemäß Fig. 5 zu einem dritten Ausführungsbeispiel.

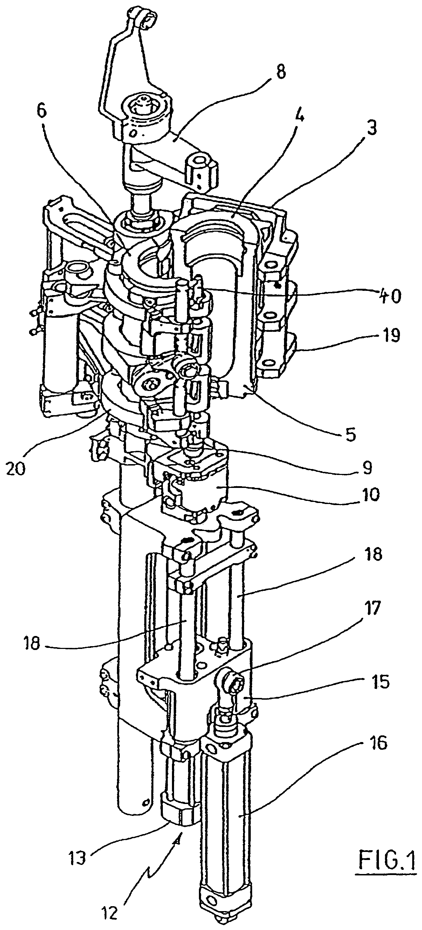

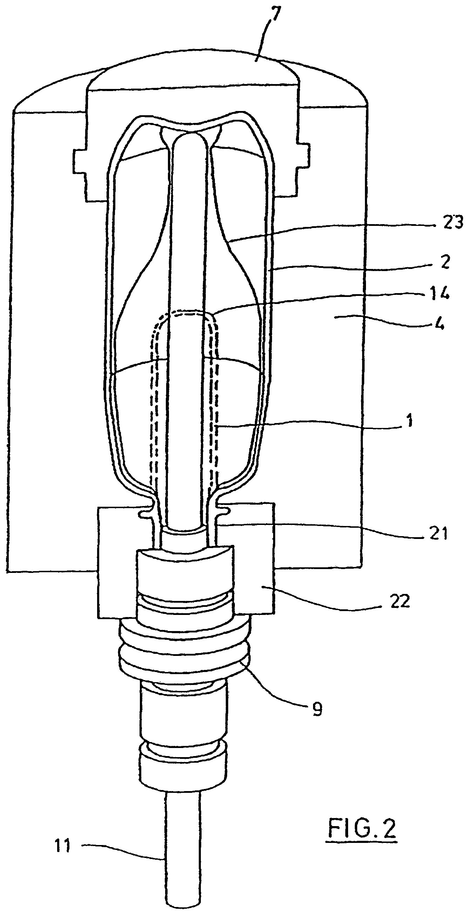

Der prinzipielle Aufbau einer Vorrichtung zur Umformung von Vorformlingen 1 in Behälter 2 ist in Fig. 1 und in Fig. 2 dargestellt.

Die Vorrichtung zur Formung des Behälters 2 besteht im Wesentlichen aus einer Blasstation 3, die mit einer Blasform 4 versehen ist, in die ein Vorformling 1 einsetzbar ist. Der Vorformling 1 kann ein spritzgegossenes Teil aus Polyethylenterephthalat (PET) sein. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und einem Bodenteil 7, das von einer Hubvorrichtung 8 positionierbar ist. Der Vorformling 1 kann im Bereich der Blasstation 3 von einem Transportdorn 9 gehalten sein, der gemeinsam mit dem Vorformling 1 eine Mehrzahl von Behandlungsstationen innerhalb der Vorrichtung durchläuft. Es ist aber auch möglich, den Vorformling 1 beispielsweise über Zangen oder andere Handhabungsmittel direkt in die Blasform 4 einzusetzen.

Zur Ermöglichung einer Druckluftzuleitung ist unterhalb des Transportdornes 9 eine Blasdüse 10 angeordnet, die dem Vorformling 1 Druckluft zuführt und gleichzeitig eine Abdichtung relativ zum Transportdorn 9 vornimmt. Bei einer abgewandelten Konstruktion ist es grundsätzlich aber auch denkbar, feste Druckluftzuleitungen zu verwenden.

Eine Reckung des Vorformlings 1 erfolgt mit Hilfe einer Reckstange 11, die von einem Zylinder 12 positioniert wird. Grundsätzlich ist es aber auch denkbar, eine mechanische Positionierung der Reckstange 11 über Kurvensegmente durchzuführen, die von Abgriffrollen beaufschlagt sind. Die Verwendung von Kurvensegmenten ist insbesondere dann zweckmäßig, wenn eine Mehrzahl von Blasstationen 3 auf einem rotierenden Blasrad angeordnet ist. Eine Verwendung von Zylindern 12 ist zweckmäßig, wenn ortsfest angeordnete Blasstationen 3 vorgesehen sind.

Bei der in Fig. 1 dargestellten Ausführungsform ist das Recksystem derart ausgebildet, dass eine Tandem-Anordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren, während des eigentlichen Reckvorganges wird der Primärzylinder 13 mit ausgefahrener Reckstange gemeinsam mit einem den Primärzylinder 13 tragenden Schlitten 15 von einem Sekundärzylinder 16 oder über eine Kurvensteuerung positioniert. Insbesondere ist daran gedacht, den Sekundärzylinder 16 derart kurvengesteuert einzusetzen, dass von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen die Führungsbahn gedrückt. Der Schlitten 15 gleitet entlang von zwei Führungselementen 18. Nach einem Schließen der im Bereich von Trägern 19, 20 angeordneten Formhälften 5, 6 erfolgt eine Verriegelung der Träger 19, 20 relativ zueinander mit Hilfe einer Verriegelungseinrichtung 40.

Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.

Fig. 2 zeigt zusätzlich zum geblasenen Behälter 2 auch gestrichelt eingezeichnet den Vorformling 1 und schematisch eine sich entwickelnde Behälterblase 23.

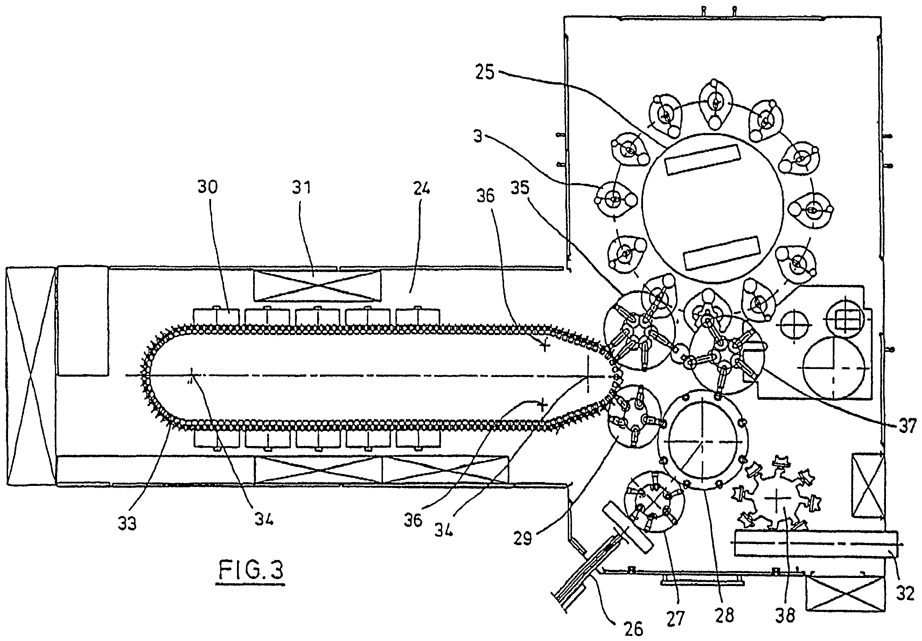

Fig. 3 zeigt den grundsätzlichen Aufbau einer Blasmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 transportiert. Entlang der Heizstrecke 24 sind Heizstrahler 30 sowie Gebläse 31 angeordnet, um die Vorformlinge 1 zu temperieren. Nach einer ausreichenden Temperierung der Vorformlinge 1 werden diese an das Blasrad 25 übergeben, in dessen Bereich die Blasstationen 3 angeordnet sind. Die fertig geblasenen Behälter 2 werden von weiteren Übergaberädern einer Ausgabestrecke 32 zugeführt.

Um einen Vorformling 1 derart in einen Behälter 2 umformen zu können, dass der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings 1 während des Orientierungsvorganges erfolgt durch Druckluftzuführung. Die Druckluftzuführung ist in eine Vorblasphase, in der Gas, zum Beispiel

Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke 24 aus einer Vielzahl umlaufender Transportelemente 33 ausgebildet ist, die kettenartig aneinandergereiht und entlang von Umlenkrädern 34 geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad 29 und einem Eingaberad 35 zugewandten Ausdehnung der Heizstrecke 24 ein einzelnes relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 29 und des Eingaberades 35 relativ zueinander erweist sich die dargestellte Anordnung als besonders zweckmäßig, da im Bereich der entsprechenden Ausdehnung der Heizstrecke 24 drei Umlenkräder 34, 36 positioniert sind, und zwar jeweils die kleineren Umlenkräder 36 im Bereich der Überleitung zu den linearen Verläufen der Heizstrecke 24 und das größere Umlenkrad 34 im unmittelbaren Übergabebereich zum Übergaberad 29 und zum Eingaberad 35 . Alternativ zur Verwendung von kettenartigen Transportelementen 33 ist es beispielsweise auch möglich, ein rotierendes Heizrad zu verwenden.

Nach einem fertigen Blasen der Behälter 2 werden diese von einem Entnahmerad 37 aus dem Bereich der Blasstationen 3 herausgeführt und über das Übergaberad 28 und ein Ausgaberad 38 zur Ausgabestrecke 32 transportiert.

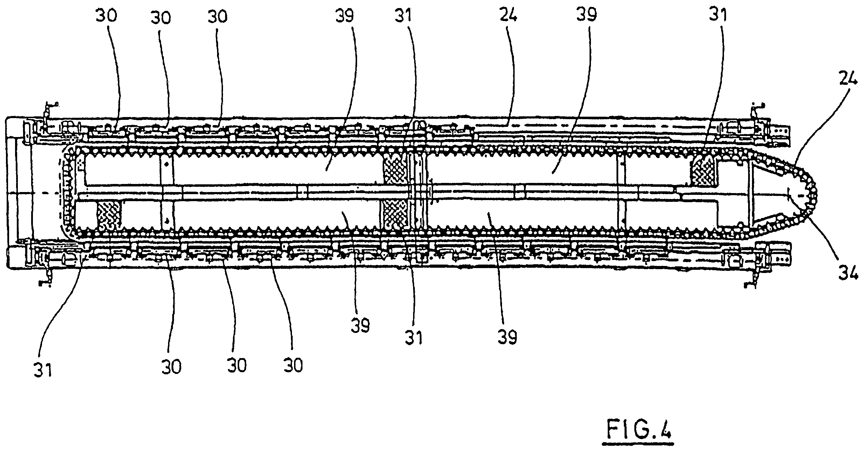

In der in Fig. 4 dargestellten modifizierten Heizstrecke 24 können durch die größere Anzahl von Heizstrahlern 30 eine größere Menge von Vorformlingen 1 je Zeiteinheit temperiert werden. Die Gebläse 31 leiten hier Kühlluft in den Bereich von Kühlluftkanälen 39 ein, die den zugeordneten Heizstrahlern 30 jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge 1 realisiert. Die Kühlluftkanäle 39 können im Bereich von den Heizstrahlern 30 gegenüberliegenden Oberflächen Reflektoren für die Heizstrahlung bereitstellen, ebenfalls ist es möglich, über die abgegebene Kühlluft auch eine Kühlung der Heizstrahler 30 zu realisieren.

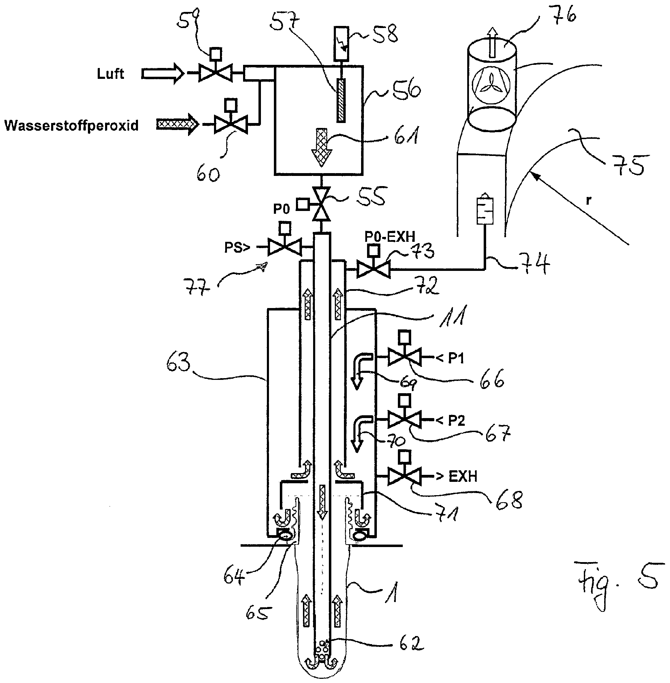

Die Figuren 5 bis 7 zeigen verschiedene Ausführungsbeispiele der Erfindung in einer prinzipienhaften und schematischen Darstellung, die sich auf diejenigen Elemente beschränkt, die für das Verständnis des Sterilisierprozesses, des Blasformungsprozesses und der Strömungswege des Blasfluides und des Sterilisierfluides notwendig erscheinen. Es wurden dabei in den Ausführungsbeispielen gleiche Bauteile mit gleichen Bezugszeichen versehen.

Die in Figur 5 gezeigte Reckstange 11 ist als hohle Reckstange ausgebildet. Im dargestellten Betriebszustand ist die Reckstange 11 in den Vorformling 1 eingefahren, befindet sich aber noch in einem Höhenabstand oberhalb des Vorformlingsbodens. Einlassseitig der Reckstange 11, das heißt auf der dem Vorformlingsboden abgewandten Seite, wird der die Reckstange durchlaufende Kanal von einem Ventil 55 beherrscht, das das Sterilisiermittel mit einem Druck P0 bei entsprechender Ansteuerung in die Reckstange 11 hineinströmen lässt. Eingangsseitig des Ventiles 55 ist ein Verdampfer 56 angeordnet. Der Verdampfer 56 weist einen Heizer 57 und einen Heizregler 58 auf. Es kann auch ein nicht dargestellter Temperaturfühler in dem Verdampfer 56 angeordnet sein, um den Heizregler 58 mit Temperaturmesswerten zu versorgen. In dem Verdampfer 56 werden Luft, die in den Verdampfer 56 eingangsseitig durch ein Luftzuführventil 59 eingespeist wird, und Wasserstoffperoxid, zum Beispiel in einem flüssigen Aggregatzustand, und das eingangsseitig des Verdampfers 56 von einem Ventil 60 beherrscht eingespeist wird, zu einem gasförmigen Wasserstoffperoxidgemisch verdampft und in Richtung des Pfeiles 61 der Reckstange 11 zugeführt.

Das Wasserstoffperoxidgemisch strömt durch die Reckstange 11 hindurch zu dessen vorformlingsseitigem Ende, wo die Reckstange 11 Austrittsöffnungen 62 aufweist. Diese Austrittsöffnungen 62 sind in der Nähe der Reckstangenkuppe und somit dem Vorformlingsboden benachbart angeordnet. Durch diese Austrittsöffnungen 62 hindurch verlässt das Wasserstoffperoxidgemisch die Reckstange 11 und beaufschlagt zunächst den Vorformlingsboden. Nachfolgend strömt das Wasserstoffperoxidgemisch außenseitig an der Reckstange 11 entlang und an der Vorformlingsinnenwand entlang in Richtung auf den offenen Mündungsbereich des Vorformlings 1.

In dem in Figur 5 gezeigten Betriebszustand ist die Blasdüse 63 dichtend auf den Vorformling 1 abgesenkt. Die Dichtung erfolgt über einen Dichtring 64 auf dem umlaufenden Neckring 65 des Vorformlings 1. In diesem Betriebszustand kann der Blasprozess für die blasformende Umformung des Vorformlings 1 in einen Behälter 2 durchgeführt werden. Dazu sind an der Blasdüse 63 Ventile 64, 65 und 66 angeordnet, die zum einen der gesteuerten Zuführung des Blasdruckes P1, der gesteuerten Zuführung des Hauptblasdruckes P2 und schließlich der gesteuerten Druckentlastung durch das Druckentlastungsventil 68 dienen. Das durch die genannten Ventile in Richtung auf den Vorformling strömende Blasgas ist durch die Pfeile 69 und 70 angedeutet.

Bevor allerdings Blasluft in den Vorformling 1 geleitet wird, erfolgt die Zuführung des Sterilisierfluides, nämlich im gezeigten Ausführungsbeispiel des Wasserstoffperoxidgemisches, das nach dem Entweichen aus dem Vorformling 1 durch ein Führungselement 71 an der direkten Rückströmung gehindert ist, sondern in seiner Strömungsrichtung so umgelenkt wird, dass es an dem Gewindebereich des Vorformlings 1 in Bodenrichtung entlang strömt, bevor es unter erneuter Strömungsrichtungsumkehr in die dem Vorformling 1 abgewandte Richtung zu einer Ableiteinrichtung 72 strömt. Diese Ableiteinrichtung 72 ist ausgangsseitig mit einem Entlastungsventil 73 versehen. Ein diesem Ventil 73 nachfolgend sich anschließendes Abführelement 74 lässt das Wasserstoffperoxid in einen stationär angeordneten Ringkanal 75 entweichen. In diesen Ringkanal 75 münden bevorzugt alle Abführelemente der auf dem Blasrad angeordneten Blasstationen. Der Ringkanal 75 weist einen Ventilator 76 auf, um das eingeleitete sterilisierende Gasgemisch abzusaugen und abzugeben.

Optional kann zwischen dem geschilderten Sterilisiervorgang und dem Blasvorgang eine Spülung des Vorformlings erfolgen. Dazu weist die Reckstange 11 auf seiner dem Vorformling abgewandten Erstreckung eine Einlassventil 77 auf, durch das durch die Reckstange 11 hindurch zum Beispiel Spülluft in den Vorformling eingespeist werden kann. Diese Spülluft durchläuft den Strömungsweg, wie er vorab für das Wasserstoffperoxidgemisch beschrieben wurde und wird also am Ende seines Strömungsweges in den Ringkanal 75 entlassen.

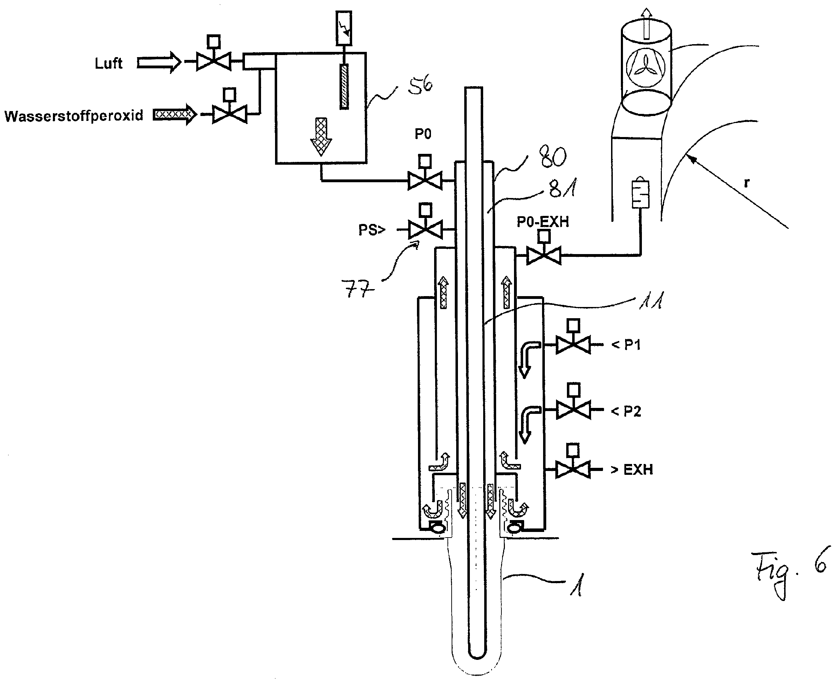

Figur 6 zeigt ein zweites Ausführungsbeispiel, das nachfolgend nur insofern erläutert werden soll, als es sich von dem Ausführungsbeispiel der Figur 5 unterscheidet.

Die Reckstange 11 der Figur 6 ist keine hohle Reckstange. Die Zuführung des Wasserstoffperoxidgemisches erfolgt über ein Zuführelement 80, das hülsenförmig ausgebildet ist und unter Ausbildung eines Ringkanales 81 die Reckstange 11 umgibt. Am einlassseitigen, dem Vorformling 1 abgewandten Ende der Zuführeinrichtung 80 wird das von einem Verdampfer 56 erzeugte Wasserstoffperoxidgemisch in den Ringkanal 81 eingespeist. Das sterilisierende Gemisch strömt entlang der Reckstange 11 und tritt am auslassseitigen offenen Ende der Hülse 80 in den Vorformling 1 ein. Das auslassseitige Ende der Hülse 80, kann anders als in Figur 6 dargestellt bodennah des Vorformlings angeordnet sein, um zuverlässig das Wasserstoffperoxidgemisch auf den Vorformlingsboden zu richten. Nach dem Ausströmen des Wasserstoffperoxidgemisches aus der Hülse 80 strömt das Sterilisierfluid an der Vorformlingsinnenwand und der Reckstangenaußenwand entlang, um den Vorformling dann über die Mündung zu verlassen. Der übrige Strömungsweg und der übrige Aufbau entsprechen dem in Figur 5 dargestellten Ausführungsbeispiel.

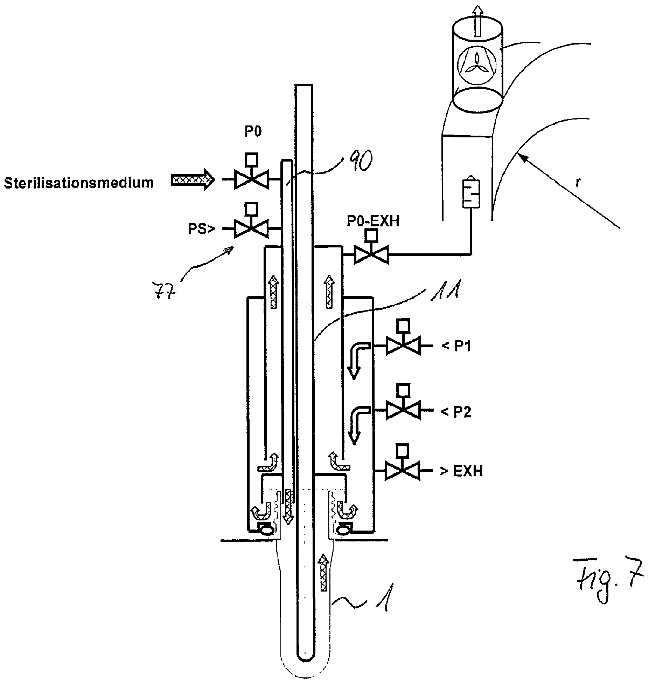

Das Ausführungsbeispiel der Figur 7 unterscheidet sich von den beiden vorab geschilderten Ausführungsbeispielen einerseits dadurch, dass kein Verdampfer vorgesehen ist, sondern das Sterilisationsmedium wird der Blassstation bereits anwendungsgeeignet zugeführt. Weiterhin unterscheidet sich das Ausführungsbeispiel der Figur 7 dadurch von den beiden anderen erläuterten Ausführungsbeispielen, dass die Zuführeinrichtung 90 seitlich entlang der Reckstange 11 angeordnet ist und die Reckstange 11 nicht radial umschließt. Entsprechend tritt das Sterilisationsmedium außermittig in den Vorformling 1 ein, um zum Beispiel auf der gezeigten linken Halbseite des Vorformlings 1 in Bodenrichtung zu strömen und auf der rechten Halbseite in Mündungsrichtung zu strömen, nachdem im Bodenbereich eine Bewegungsumkehr vollzogen ist. Der Strömungsweg nach Verlassen des Vorformlings 1 entspricht dabei wieder den Ausführungsbeispielen der Figuren 5 und 6, so dass hierzu keine weiteren Erläuterungen notwendig sind.

Sämtlichen Ausführungsbeispielen gemeinsam ist, dass das Sterilisationsmedium sowohl entlang der Reckstange als auch entlang der Vorformlingsinnenwand geführt ist. Auch die für die Sterilität kritischen Bereiche der Blasdüse werden von dem Sterilisationsmedium umströmt und dadurch keimfrei gehalten oder von Keimen befreit. Allen Ausführungsbeispielen gemeinsam ist auch, dass die Sterilisierung dieser drei für die Sterilität wichtigen Komponenten zeitgleich erfolgt, weil der Strömungsweg des Sterilisationsmediums entsprechend gewählt ist. Allen Ausführungsbeispielen gemeinsam ist auch, dass der Strömungsweg gezielt so geformt wird, dass ein Entlangströmen des Sterilisationsmediums am Gewindebereich des Vorformlings erfolgt.

## Patentansprüche

1. Verfahren zur Herstellung von blasgeformten, mindestens bereichsweise sterilen Behältern (2) in einer Blasformungsmaschine, insbesondere in einer Blasformungsmaschine mit auf einem rotierenden Blasrad (25) angeordneten Blasstationen (3), bei dem ein Vorformling (1) aus einem thermoplastischen Material zunächst erwärmt und dann in einer Blasstation (3) von einer insbesondere hohlen Reckstange (11) gereckt und über eine Blasdüse (10) mit einem unter Druck stehenden Blasfluid beaufschlagt wird, sowie bei dem dem Vorformling (1) in der Blasstation (3) zur Ausführung einer Sterilisierung ein Sterilisierfluid zugeführt wird, wobei das Sterilisierfluid in der Blasstation aus einem Auslass in den Vorformling eingespeist und über einen Einlass wieder abgeführt wird und dazwischen einen Strömungsweg durchläuft, wobei das Sterilisierfluid auf seinem Strömungsweg durch die Reckstange (11) hindurch- oder an der Reckstange vorbeigeführt wird, **dadurch gekennzeichnet, dass** die Zuführung des Sterilisierfluides im laufenden Betrieb der Blasformungsmaschine erfolgt, wobei der Vorformling (1) mit dem unter Druck stehenden Blasfluid erst beaufschlagt wird, nachdem die Sterilisierung mit dem Sterilisierfluid beendet ist, insbesondere wobei der Auslass zumindest zeitweise in Bodennähe des Vorformlings (1) angeordnet wird, und insbesondere wobei der Einlass zumindest zeitweise oberhalb des Auslasses angeordnet wird, und insbesondere wobei zwischen dem Auslass und dem Einlass ein kontinuierlicher Fluß an Sterilisierfluid erzeugt wird, der entlang des Vorformlings und der Reckstange und der Blasdüse geführt ist.

2. Verfahren nach Anspruch 1, **dadurch gekennzeichnet, dass** der Vorformling (1) zwischen der Sterilisierung und der Blasformung mit einem sterilen Spülfluid gespült wird.

3. Verfahren nach Anspruch 1 oder nach Anspruch 2, **dadurch gekennzeichnet, dass** das Sterilisierfluid von Führungsmitteln so geführt wird, dass es die Vorformlingsinnenwand bis einschließlich der Dichtfläche für einen später aufzusetzenden Behälterverschluss überstreicht.

4. Verfahren nach Anspruch 3, **dadurch gekennzeichnet, dass** das Sterilisierfluid so geführt wird, dass es auch den Gewindebereich (1) des Vorformlings (1) überstreicht, insbesondere bis hin zum Tragring (1).

5. Verfahren nach einem der vorhergehenden Ansprüche, **dadurch gekennzeichnet, dass** das Sterilisierfluid durch die Reckstange (11) hindurch zugeführt wird, und insbesondere durch die Blasdüse (10) hindurch abgeführt wird.

6. Verfahren nach einem der vorhergehenden Ansprüche, **dadurch gekennzeichnet, dass** als Sterilisierfluid ein Gemisch aus warmer Luft und verdampftem Wasserstoffperoxid verwendet wird, insbesondere wobei der Verdampfer für das Wasserstoffperoxid auf dem Blasrad (25) angeordnet wird.

7. Verfahren nach einem der vorhergehenden Ansprüche, **dadurch gekennzeichnet, dass** die Reckstange (11) vor oder während der Sterilisierung bis auf den Vorformlingsboden (1) abgesenkt wird, und wobei die Reckstange (11) den Auslass bildet, indem Austrittsöffnungen für das Sterilisierfluid im spitzenseitigen Endbereich der Reckstange (11) ausgebildet sind.

8. Blasformungsmaschine, insbesondere Blasformungsmaschine mit auf einem rotierenden Blasrad (25) angeordneten Blasstationen (3), zur Herstellung von blasgeformten, mindestens bereichsweise sterilen Behältern (2), die eine Heizstrecke (24) zur Temperierung von Vorformlingen (1) aus einem thermoplastischen Material und wenigstens eine Blasstation (3) zur Blasverformung der Vorformlinge (1) in Behälter (2) aufweist, wobei die Blasstation (3) eine Reckstange (11) zur Reckung des Vorformlings (1) und eine Blasdüse (10) zur ventilbeherrschten Beaufschlagung des Vorformlings (1) mit einem unter Druck stehenden Blasfluid aufweist, sowie bei der eine ventilbeherrschte Zuführeinrichtung für das Zuführen und Ableiten eines Sterilisierfluides zu der und von der Blasstation (3) zur Ausführung einer Sterilisierung angeordnet ist, insbesondere wobei die Reckstange (11) Bestandteil der Zuführeinrichtung ist und einen Innenkanal zur ventilbeherrschten Durchleitung des Sterilisierfluides aufweist, **gekennzeichnet durch** Ventilsteuermittel und/oder Führungsmittel, die zur Durchführung eines Verfahrens nach einem oder mehreren der vorhergehenden Verfahrensansprüche ausgebildet und/oder angeordnet sind.

9. Blasformungsmaschine nach Anspruch 8, **dadurch gekennzeichnet, dass** die Zuführeinrichtung mit einem einen Auslass aufweisenden Abschnitt in den Vorformling (1) einführbar angeordnet und ausgebildet ist, insbesondere wobei die Reckstange (11) diesen Abschnitt ausbildet.

10. Blasformungsmaschine nach Anspruch 8 oder 9, **dadurch gekennzeichnet, dass** die Blasdüse Bestandteil der Zuführeinrichtung und zum Hindurchleiten des Sterilisierfluides ausgebildet ist, und insbesondere einen Einlass für das aus dem Vorformling hinausströmende Fluid aufweist.

11. Blasformungsmaschine nach einem der vorhergehenden Ansprüche 8 bis 10, **dadurch gekennzeichnet, dass** eine Sammelvorrichtung für das verbrauchte Sterilisierfluid mit der Zuführeinrichtung in kommunizierender Verbindung steht, insbesondere wobei die Sammelvorrichtung als ein insbesondere stationär angeordneter Ringkanal ausgebildet ist.

## Claims

1. A method for the production of blow moulded containers (2), that are sterile at least in certain regions, in a blow moulding machine, in particular in a blow moulding machine comprising blowing stations (3) arranged on a rotating blow moulding wheel (25), in which method a preform (1) made of thermoplastic material is first heated and then stretched in a blowing station (3) by a particularly hollow stretch forming bar (11) and exposed to a pressurised blowing fluid via a blowing nozzle (10), and in which method a sterilising fluid is fed to the preform (1) in the blowing station (3) for carrying out a sterilisation process, wherein
the sterilising fluid is fed into the preform from an outlet in the blowing station and is discharged again through an inlet and passes through a flow path therebetween, wherein, on its flow path, the sterilising fluid is passed through or past the stretch forming bar (11),
**characterised in that**
- the sterilising fluid is fed during running operation of the blow moulding machine, wherein the preform (1) is exposed to the pressurised blowing fluid only after sterilisation with the sterilising fluid has been completed, in particular wherein the outlet is at least temporarily arranged in the proximity of the bottom of the preform (1), and in particular wherein the inlet is at least temporarily arranged above the outlet, and in particular wherein a continuous flow of sterilising fluid, which is fed along the preform and the stretch forming bar and the blowing nozzle, is generated between the outlet and the inlet.

2. The method in accordance with Claim 1, **characterised in that** the preform (1) is rinsed with a sterile rinsing fluid between the sterilisation and the blow moulding processes.

3. The method in accordance with Claim 1 or in accordance with Claim 2, **characterised in that** the sterilising fluid is guided by guiding means such that it glides over the internal wall of the preform up to and including the sealing surface for a container closure to be fitted at a later point.

4. The method in accordance with Claim 3, **characterised in that** the sterilising fluid is guided such that it also glides over the threaded range (1) of the preform (1), in particular all the way up to the supporting ring (1).

5. The method in accordance with any one of the preceding claims, **characterised in that** the sterilising fluid is fed through the stretch forming bar (11) and, in particular, discharged through the blowing nozzle (10).

6. The method in accordance with any one of the preceding claims, **characterised in that** a mixture consisting of hot air and vaporised hydrogen peroxide is used as sterilising fluid, in particular wherein the vaporiser for the hydrogen peroxide is arranged on the blow moulding wheel (25).

7. The method in accordance with any one of the preceding claims, **characterised in that** the stretch forming bar (11) is lowered down to the bottom of the preform (1) prior to or during the sterilisation process, and wherein the stretch forming bar (11) forms the outlet by forming exit openings for the sterilising fluid in the tip-sided end region of the stretch forming bar (11).

8. A blow moulding machine, in particular a blow moulding machine comprising blowing stations (3) arranged on a rotating blow moulding wheel (25), for the production of blow moulded containers (2) that are sterile at least in certain regions, which blow moulding machine has a heating section (24) for controlling the temperature of preforms (1) made of thermoplastic material and at least one blowing station (3) for blow moulding the preforms (1) to form containers (2), wherein the blowing station (3) has a stretch forming bar (11) for stretching the preform (1) and a blowing nozzle (10) for valve-controlled pressurisation of the preform (1) with a pressurised blowing fluid, and wherein a valve-controlled feeding device for feeding and discharging a sterilising fluid to and from the blowing station (3) for carrying out a sterilisation process is arranged in said blow moulding machine, in particular wherein the stretch forming bar (11) is a part of the feeding device and has an interior channel for valve-controlled passage of the sterilising fluid, **characterised by** valve control means and/or guiding means which are formed and/or arranged for performing a method in accordance with any one or more of the preceding method claims.

9. The blow moulding machine in accordance with Claim 8, **characterised in that** the feeding device is arranged and formed with a section having an outlet such that it can be inserted into the preform (1), in particular wherein the stretch forming bar (11) forms this section.

10. The blow moulding machine in accordance with Claim 8 or 9, **characterised in that** the blowing nozzle is a part of the feeding device and is formed for passing-through the sterilising fluid and, in particular, has an inlet for the fluid flowing out of the preform.

11. The blow moulding machine in accordance with any one of the preceding Claims 8 to 10, **characterised in that** a collecting device for the used-up sterilising fluid is in communication with the feeding device, in particular wherein the collecting device is formed as an annular channel that is, in particular, arranged stationary.

## Revendications

1. Procédé de fabrication de récipients (2) au moins partiellement stériles moulés par soufflage dans une machine de moulage par soufflage, notamment dans une machine de moulage par soufflage dotée de stations de soufflage (3) agencées sur une roue de soufflage (25) en rotation, dans le cadre duquel une préforme (1) en un matériau thermoplastique est d'abord chauffée puis, dans une station de soufflage (3), étirée par une barre d'étirage (11) notamment creuse et, par l'intermédiaire d'une buse de soufflage (10), soumise à l'action d'un fluide de soufflage sous pression, et dans le cadre duquel un fluide de stérilisation est amené vers la préforme dans la station de soufflage (3) pour y procéder à une stérilisation, le fluide de stérilisation étant introduit dans la préforme par une sortie et à nouveau évacué par une entrée entre lesquelles le fluide de stérilisation forme un courant qui traverse la barre d'étirage (11) puis s'écoule le long de celle-ci, **caractérisé en ce que** l'adduction du fluide de stérilisation a lieu pendant le fonctionnement de la machine de moulage par soufflage, la préforme (1) n'étant soumise à l'action du fluide de soufflage sous pression qu'après achèvement de la stérilisation au moyen du fluide de stérilisation, et la sortie étant notamment, temporairement au moins, placée à proximité du fond de la préforme (1), l'entrée étant notamment, temporairement au moins, placée au-dessus de la sortie, et un flux continu de fluide de stérilisation étant notamment produit entre la sortie et l'entrée, lequel flux est conduit le long de la préforme, de la barre d'étirage et de la buse de soufflage.

2. Procédé selon la revendication 1, **caractérisé en ce que,** entre la stérilisation et le moulage par soufflage, la préforme (1) est rincée avec un fluide de rinçage stérile.

3. Procédé selon la revendication 1 ou selon la revendication 2, **caractérisé en ce que** des dispositifs conducteurs conduisent le fluide de stérilisation de façon à ce qu'il couvre la paroi intérieure de la préforme jusqu'à inclure la surface d'étanchéification destinée à recevoir une obturation du récipient mise en place ultérieurement.

4. Procédé selon la revendication 3, **caractérisée en ce que** le fluide de stérilisation est conduit de façon à ce qu'il couvre également la section filetée (1) de la préforme (1), notamment jusqu'à la collerette (1).

5. Procédé selon l'une des revendications précédentes, **caractérisé en ce que** le fluide de stérilisation est conduit à travers la barre d'étirage (11) et en particulier à travers la buse de soufflage (10).

6. Procédé selon l'une des revendications précédentes, **caractérisé en ce que** le fluide de stérilisation est un mélange d'air chaud et de vapeur d'eau oxygénée, l'évaporateurs pour l'eau oxygénée étant notamment agencé sur la roue de soufflage (25).

7. Procédé selon l'une des revendications précédentes, **caractérisé en ce que,** avant ou pendant la stérilisation, la barre d'étirage (11) est abaissée jusqu'au fond de la préforme (1), la barre d'étirage (11) formant la sortie dans laquelle sont aménagés des orifices de sortie du fluide de stérilisation dans la section d'extrémité de la barre d'étirage au bout de celle-ci.

8. Machine de moulage par soufflage, notamment dotée de stations de soufflage (3) agencées sur une roue de soufflage (25) en rotation, pour la fabrication de récipients (2) au moins partiellement stériles moulés par soufflage, présentant une section de chauffage(24) pour équilibrer la température de préformes (1) en un matériau thermoplastique et au moins une station de soufflage (3) pour la transformation par moulage par soufflage des préformes en récipients (2), la station de soufflage (3) présentant une barre d'étirage (11) pour l'étirage de la préforme (1) et une buse de soufflage (10) pour l'injection commandée par des soupapes d'un fluide de soufflage sous pression dans la préforme, ainsi qu'un dispositif d'adduction commandé par des soupapes pour l'introduction et l'évacuation d'un fluide de stérilisation pour procéder à une stérilisation dans la station de soufflage (3), la barre d'étirage (11) faisant notamment partie du dispositif d'adduction et présentant un canal intérieur commandé par des soupapes pour le passage du fluide de stérilisation, **caractérisé par** des moyens de commande à soupapes et/ou des moyens conducteurs conçus et/ou agencés de façon à assurer la mise en oeuvre d'un procédé selon l'une ou plusieurs des revendications précédentes.

9. Machine de moulage par soufflage selon la revendication 8, **caractérisée en ce que** Le dispositif d'adduction est conformé avec une section présentant une sortie agencée de façon à pouvoir être introduite dans la préforme (1), la barre d'étirage (11) formant notamment cette section.

10. Machine de moulage par soufflage selon la revendication 8 ou 9, **caractérisée en ce que** la buse de soufflage fait partie du dispositif d'adduction et est conformée de façon à servir de conduit au fluide de stérilisation et présente notamment une entrée pour le fluide qui s'écoule de la préforme.

11. Machine de moulage par soufflage selon l'une des revendications précédentes 8 à 10, **caractérisée en ce qu'un** dispositif collecteur pour le fluide de stérilisation usé est raccordé au dispositif d'adduction de façon à communiquer avec celui-ci, le dispositif collecteur étant notamment conçu sous forme de canal annulaire stationnaire.
